# FASCICULE DE BREVET EUROPEEN

(11) **EP 3 370 390 B1**
(45) Date de publication et mention de la délivrance du brevet: **02.06.2021**
(21) Numéro de dépôt: 18159518.2
(22) Date de dépôt: 01.03.2018
(51) Int. Cl.: H04L 29/06, H04L 12/58

(54) **PROCÉDÉ DE RECUEIL DE CONSENTEMENT ÉLECTRONIQUE POUR UN ENVOI DE COURRIER RECOMMANDÉ ÉLECTRONIQUE**
ELEKTRONISCHES VERFAHREN ZUM EINHOLEN DER EINWILLIGUNG FÜR DIE ELEKTRONISCHE ÜBERSENDUNG EINES EINSCHREIBENS
METHOD FOR COLLECTING ELECTRONIC CONSENT FOR SENDING ELECTRONIC REGISTERED MAIL

(30) Priorité: 01.03.2017 FR 1751684
(43) Date de publication de la demande: 05.09.2018
(73) Titulaire: AR24, 75008 Paris (FR)
(72) Inventeur: DE MALZAC, Guillaume, 75008 PARIS (FR); SCHNEIDER, Clément, 67000 Strasbourg (FR)
(74) Mandataire: Novagraaf Technologies

(56) Documents cités:
- WO-A1-2009/129134
- US-A1- 2003 172 120

## Description

### DOMAINE TECHNIQUE

La présente description concerne un procédé et un système de recueil de consentement électronique pour un envoi de courrier recommandé électronique.

### ETAT DE L'ART

Le courrier recommandé avec accusé de réception est un service proposé par les services postaux français, permettant à un expéditeur d'envoyer un courrier rédigé ou imprimé sur papier à un destinataire, contre signature, et permettant d'établir juridiquement la preuve du dépôt (date et lieu d'expédition) du courrier ainsi que la preuve de la réception grâce à la signature du destinataire ou d'un mandataire ayant procuration pour recevoir les courriers du destinataire.

Sous le régime de l'ordonnance n°2005-674 du 16 Juin 2005 et de l'article 1369-8 du Code Civil de la loi française, il est possible d'envoyer une lettre recommandée électronique (notée ci-après en abrégé, LRE). Cette possibilité est offerte sous réserve de fournir préalablement quelques informations déclaratives sur l'expéditeur et le destinataire. Il est ainsi possible d'envoyer une LRE aussi aisément qu'on envoie un courriel. Un exemple de système d'envoi de LRE sous forme électronique, conforme à cette ordonnance, est par exemple décrit dans le document de brevet publié sous le numéro WO 2016/083734 A1. Par ailleurs, la demande de brevet publiée US 2003/0172120 A1 décrit une solution technique pour attester de la délivrance et de l'intégrité de messages électroniques et la demande de brevet publiée WO 2009/129134 A1 décrit un système de gestion de courriels permettant la vérification de l'identité de l'expéditeur et du destinataire, améliorant la sécurité et la confidentialité, et produisant une preuve de délivrance d'un message.

Avec la réglementation « elDAS » entrée en vigueur au 1^{er} Juillet 2016, une LRE juridiquement qualifiée doit désormais satisfaire à un certain nombre d'exigences supplémentaires. La loi pour une République Numérique du 8 Octobre 2016 est venue en effet renforcer les exigences du cadre réglementaire européen pour renforcer la sécurité relative à l'identification des parties, notamment en obligeant l'expéditeur d'une LRE à obtenir, préalablement à l'envoi de la LRE, le consentement de son destinataire, lorsque ce destinataire n'est pas un professionnel, dans le cas où l'expéditeur souhaite que l'envoi soit remis au destinataire par voie électronique.

Un autre type d'envoi de LRE, appelé ici LRE "hybride", consiste à envoyer sous forme électronique une demande d'envoi de LRE, par exemple accompagnée du courrier à envoyer au format électronique, à imprimer la lettre sur papier par un tiers achemineur (ou par une société partenaire), puis acheminer et remettre en main propre au destinataire la lettre sous forme papier. Un tel envoi de LRE hybride ne requiert pas que le destinataire ait consenti préalablement à sa remise.

Une telle LRE hybride est plus lente et plus onéreuse mais moins contraignant à envoyer qu'une LRE notifiée au format électronique. A contrario, une LRE remise au format électronique est quasi-instantanée et peu onéreuse, mais soumise à la condition de recueil préalable du consentement du destinataire.

En cas de litige entre l'expéditeur et le destinataire d'une LRE notifiée électroniquement, le destinataire pourrait, par exemple, essayer de faire annuler la LRE en contestant la régularité de la notification qui lui a été faite. Une manière d'en contester la régularité pourrait être de contester le fait qu'il a donné son consentement à une notification par voie électronique. Ainsi, le consentement doit en toute logique être obtenu d'une manière qui permette d'en apporter une preuve certaine en cas de litige. En particulier, un simple courriel ne suffit pas car ce courriel ne permet en général pas d'identifier de manière certaine son émetteur.

La présente description propose un procédé et un système de recueil de consentement électronique pour une notification par voie électronique d'un courrier recommandé qui vient améliorer la situation.

### RESUME

La présente invention concerne des procédés et systèmes informatiques permettant de recueillir le consentement de futurs destinataires d'envoi de courriers recommandés électroniques, à distance, par l'intermédiaire d'un tiers de recueil de consentement, et préalablement à un envoi courrier recommandé électronique ou en prévision de tout envoi potentiel ultérieur.

La présente description a pour objet, selon un premier aspect, un procédé de recueil de consentement électronique pour une notification par voie électronique d'un courrier recommandé. Dans un ou plusieurs modes de réalisation, le procédé est mis en œuvre par au moins un ordinateur et comprend les étapes suivantes : une réception d'une requête électronique de recueil d'un consentement d'un utilisateur destinataire à recevoir un courrier recommandé électronique provenant de l'utilisateur expéditeur, la requête comprenant une adresse électronique de contact de l'utilisateur destinataire ; un envoi à l'adresse électronique de contact d'un message multimédia d'interrogation de l'utilisateur destinataire, le message multimédia comprenant une identification de l'utilisateur expéditeur et des données de recueil de réponse pour répondre au message multimédia; un déclenchement d'une procédure de vérification d'identité de l'utilisateur destinataire et une obtention d'un résultat de la procédure de vérification d'identité ; et une mise à disposition de l'utilisateur expéditeur, en cas de réception d'une réponse positive au message multimédia par laquelle l'utilisateur destinataire signifie son consentement et en cas de résultat positif de la procédure de vérification d'identité, de données probatoires représentatives du consentement.

Le procédé selon le premier aspect peut être mis en œuvre par des moyens informatiques d'un tiers de confiance, au moyen par exemple d'un programme informatique du tiers de confiance, ce programme informatique pouvant être exécuté sur un serveur informatique du tiers de confiance et/ou sur un terminal. Le terminal peut être un terminal configuré pour communiquer avec un serveur informatique du tiers de confiance. Ce tiers de confiance agit comme un intermédiaire entre l'utilisateur expéditeur (désigné également dans ce document de manière simplifiée par « expéditeur ») et l'utilisateur destinataire (désigné également dans ce document de manière simplifiée par « destinataire ») afin de recueillir le consentement et de générer les données probatoires. Ce tiers de confiance peut agir comme tiers de recueil de consentement, tiers achemineur de courrier recommandé électronique, en encore comme tiers éditique en charge de l'impression de courrier sous forme électronique. Chacune de ces fonctions peut être assumée par une personne morale différente ou par une même personne morale. Chacune de ces fonctions peut être mise en œuvre par un ou plusieurs systèmes informatiques physiquement distincts, que ce(s) système(s) informatique(s) soient exploités ou non par une même personne morale ou par des personnes morales différentes.

Le destinataire peut signifier, par voie électronique, son consentement à être notifié par voie électronique d'un courrier recommandé. Le destinataire est en outre identifié par une procédure d'identification sans que sa présence physique ne soit nécessaire. Les données probatoires sont mises à disposition si son identité a pu être vérifiée. Le niveau d'exigence requis pour la procédure de vérification d'identité du destinataire peut être choisi en fonction de la réglementation en vigueur, par exemple imposer ou non une authentification forte de l'utilisateur.

Un avantage de l'invention découle dans la délégation de la tâche du recueil du consentement du destinataire au tiers de confiance, car ce tiers de confiance peut mémoriser des données probatoires représentatives du consentement de façon sécurisée et pérenne et les mettre à disposition de l'utilisateur. En outre, ce tiers de confiance peut valider / vérifier des données probatoires, notamment en vérifier l'intégrité.

Selon un ou plusieurs modes de réalisation, le procédé selon le premier aspect comprend en outre une mise à disposition à l'utilisateur expéditeur, en cas de non réception dans un premier délai d'attente d'une réponse de l'utilisateur destinataire au message multimédia, de données numériques représentatives de l'absence de réception de réponse.

Selon un ou plusieurs modes de réalisation, le procédé selon le premier aspect comprend en outre une mise à disposition de l'utilisateur expéditeur, en cas de réception d'une réponse négative par laquelle l'utilisateur destinataire signifie son refus, de données numériques représentatives du refus.

Selon un ou plusieurs modes de réalisation du procédé selon le premier aspect, les données de recueil de réponse comprennent au moins un lien hypertexte à activer pour déclencher l'envoi d'une réponse.

Selon un ou plusieurs modes de réalisation du procédé selon le premier aspect, les données de recueil de réponse comprennent un lien hypertexte à activer pour déclencher un envoi d'une réponse positive et un lien hypertexte à activer pour déclencher un envoi d'une réponse négative.

Selon un ou plusieurs modes de réalisation du procédé selon le premier aspect, la procédure de vérification d'identité est déclenchée en cas de réponse positive ou négative au message multimédia d'interrogation.

Selon un ou plusieurs modes de réalisation, le procédé selon le premier aspect comprend, en cas de réception d'une réponse au message multimédia, un horodatage de la réponse et un stockage d'une date en association avec les données probatoires.

Selon un ou plusieurs modes de réalisation, le procédé selon le premier aspect comprend en outre une transmission, à un système informatique d'un tiers de vérification d'identité apte à mettre en œuvre la procédure de vérification d'identité, de données d'identification et/ou d'authentification de l'utilisateur destinataire ; et une réception, en provenance du système informatique du tiers de vérification d'identité, du résultat de la procédure de vérification d'identité, le résultat de la procédure de vérification d'identité comprenant des données d'identification de l'utilisateur destinataire vérifiées par le système informatique du tiers de vérification d'identité.

La présente description a pour objet, selon un deuxième aspect, un procédé d'envoi de courrier recommandé électronique. Dans un ou plusieurs modes de réalisation, le procédé d'envoi de courrier recommandé électronique selon le deuxième aspect est mis en œuvre par au moins un ordinateur et comprend les étapes suivantes : un enregistrement, dans une base de données de consentements, de données numériques représentatives d'un consentement ou refus donné par un utilisateur destinataire pour une notification par voie électronique d'un courrier recommandé provenant d'un ensemble d'au moins un utilisateur expéditeur ; une réception, d'une requête d'envoi de courrier recommandé électronique provenant d'un premier utilisateur expéditeur; une interrogation de la base de données de consentements pour déterminer si un consentement a été donné par l'utilisateur destinataire pour une notification par voie électronique d'un courrier recommandé provenant du premier utilisateur expéditeur ; et en cas de réponse positive à l'interrogation, un déclenchement d'une notification par voie électronique, par un système informatique d'un tiers achemineur, du courrier recommandé électronique et une mise à disposition de l'utilisateur expéditeur de données probatoires représentatives du consentement donné et de la remise par voie électronique du courrier recommandé électronique.

Le procédé selon le deuxième aspect peut également être mis en œuvre par des moyens informatiques d'un tiers de confiance, au moyen par exemple d'un programme informatique du tiers de confiance, ce programme informatique pouvant être exécuté sur un serveur informatique du tiers de confiance et/ou sur un terminal. Ce tiers de confiance peut agir comme tiers de recueil de consentement, tiers achemineur de courrier recommandé électronique, en encore comme tiers éditique en charge de l'impression de courrier sous forme électronique.

Lorsque la notification du courrier recommandé est réalisée par voie électronique, on parlera dans ce document de remise par voie électronique du courrier recommandé électronique et de remise par voie papier dans le cas où la notification est réalisée par remise du courrier sous forme papier.

Le procédé selon le deuxième aspect permet à l'utilisateur destinataire de signifier, hors sollicitation par un tiers, son consentement ou refus en prévision de requêtes futures pour l'envoi de courrier recommandé. Lors du traitement d'une requête d'envoi de courrier recommandé électronique, selon qu'un consentement a été recueilli ou non, le courrier recommandé pourra être, sans délai, remis au format électronique, ou au contraire au format papier, sans que l'expéditeur n'ait à effectuer de choix préalable du type d'envoi recommandé électronique à utiliser.

L'envoi recommandé électronique à un destinataire non professionnel n'ayant, au regard de la loi française, de valeur probante que si la preuve du recueil du consentement est également apportée, la probité de la remise du courrier recommandé électronique et la probité du consentement vont de pair. Il est à la fois plus simple et plus sécurisé d'archiver conjointement la preuve de consentement et la preuve de la remise du courrier recommandé électronique, plutôt que de risquer de perdre la preuve de l'un, rendant de-facto la preuve de l'autre caduque.

Dans un ou plusieurs modes de réalisation, le procédé d'envoi de courrier recommandé électronique selon le deuxième aspect comprend une mise en œuvre d'un procédé de recueil de consentement électronique selon le premier aspect et l'enregistrement dans la base de données de consentements est consécutif à une réponse donnée au message multimédia envoyé lors du procédé de recueil de consentement électronique selon le premier aspect.

Dans un ou plusieurs modes de réalisation du procédé d'envoi de courrier recommandé électronique selon le deuxième aspect, l'enregistrement dans la base de données de consentements est consécutif à une requête d'enregistrement de consentement ou refus émise par l'utilisateur destinataire.

Dans un ou plusieurs modes de réalisation, le procédé d'envoi de courrier recommandé électronique selon le deuxième aspect comprenant en outre, en cas de réponse négative ou en l'absence de réponse au message multimédia d'interrogation, un déclenchement d'une mise en œuvre, par un système informatique d'un tiers éditique, d'un procédé d'envoi de courrier recommandé sous forme papier.

La présente description a pour objet, selon un troisième aspect, un procédé d'envoi de courrier recommandé électronique intégrant des étapes d'un procédé de recueil de consentement et optimisant ainsi les ressources nécessaires pour l'envoi du recommandé.

Dans un ou plusieurs modes de réalisation, le procédé d'envoi de courrier recommandé électronique selon le troisième aspect est mis en œuvre par au moins un ordinateur et comprend les étapes suivantes : une réception, d'une requête d'envoi de courrier recommandé électronique provenant d'un utilisateur expéditeur, la requête comprenant une adresse électronique de contact de l'utilisateur destinataire; un envoi à l'adresse électronique de contact d'un message multimédia d'interrogation de l'utilisateur destinataire, le message multimédia d'interrogation comprenant une identification de l'utilisateur expéditeur et des données de recueil de réponse pour répondre au message multimédia d'interrogation; un déclenchement d'une procédure de vérification d'identité de l'utilisateur destinataire et une réception d'un résultat de la procédure de vérification d'identité ; le procédé comprenant en outre, en cas de réception d'une réponse positive au message multimédia par laquelle l'utilisateur destinataire signifie son consentement et en cas de résultat positif de la procédure de vérification d'identité: un déclenchement d'une notification par voie électronique du courrier recommandé électronique et une mise à disposition à l'utilisateur expéditeur de données probatoires représentatives du consentement et de la notification par voie électronique du courrier recommandé électronique.

Le procédé selon le troisième aspect peut être mis en œuvre par des moyens informatiques d'un tiers de confiance, au moyen par exemple d'un programme informatique du tiers de confiance, ce programme informatique pouvant être exécuté sur un serveur informatique du tiers de confiance et/ou sur un terminal. Ce tiers de confiance peut agir comme tiers de recueil de consentement, tiers achemineur de courrier recommandé électronique, en encore comme tiers éditique en charge de l'impression de courrier sous forme électronique.

Conformément au procédé selon le troisième aspect, l'archivage de la preuve du consentement préalable à la remise par voie électronique ainsi que la preuve de la remise par voie électronique du courrier recommandé peut se faire de façon conjointe et optimisée en termes de ressources (temps, systèmes informatiques).

Dans un ou plusieurs modes de réalisation, le procédé selon le troisième aspect comprend en outre, en cas de réception d'une réponse négative au message multimédia par laquelle l'utilisateur destinataire signifie son refus ou en cas d'absence de réponse dans un délai d'attente, un déclenchement d'une mise en œuvre, par un système informatique d'un tiers éditique, d'un procédé d'envoi de courrier recommandé sous forme papier.

La présente description a pour objet, selon un quatrième aspect, un programme informatique comprenant des instructions de code pour l'exécution des étapes d'un procédé selon le premier, deuxième ou troisième aspect, lorsque ledit programme informatique est exécuté par un processeur de données.

La présente description a pour objet, selon un cinquième aspect, un système informatique de recueil de consentement électronique pour une notification par voie électronique d'un courrier recommandé, le système informatique comprenant au moins une mémoire de stockage d'instructions de code de programme d'ordinateur pour l'exécution d'un procédé selon le premier, deuxième ou troisième aspect et au moins un processeur de données configuré pour exécuter le programme d'ordinateur.

### BREVE DESCRIPTION DES FIGURES

D'autres avantages et caractéristiques de la technique présentée ci-dessus apparaîtront à la lecture de la description détaillée ci-dessous, faite par référence aux figures dans lesquelles :
- la figure 1A représente schématiquement un premier système de recueil de consentement électronique selon un exemple de réalisation;
- la figure 1B représente schématiquement un deuxième système de recueil de consentement électronique selon un exemple de réalisation;
- la figure 1C représente schématiquement une architecture d'un dispositif informatique ou système informatique;
- la figure 2A représente schématiquement un organigramme d'un procédé de recueil de consentement électronique selon un exemple de réalisation;
- la figure 2B représente schématiquement un organigramme d'un procédé d'envoi de courrier recommandé électronique selon un exemple de réalisation;
- la figure 3 représente schématiquement un organigramme d'un procédé d'envoi de courrier recommandé électronique selon un exemple de réalisation.

Dans les différentes figures, des éléments identiques ou similaires portent les mêmes références.

### DESCRIPTION DETAILLEE

La présente description, est faite par référence à des fonctions, unités fonctionnelles, entités, schémas blocs et organigrammes qui décrivent différents modes de réalisation de procédé, systèmes et programmes. Chaque fonction, unité fonctionnelle, entité, étape d'un organigramme peut être mis en œuvre par logiciel, hardware, firmware, microcode ou toute combinaison appropriée de ces technologies. Lorsqu'un logiciel est utilisé, les fonctions, unités fonctionnelles, entités ou étapes peuvent être mises en œuvre par des instructions de programme d'ordinateur ou du code logiciel. Ces instructions peuvent être stockées ou transmises vers un support de stockage lisible par un ordinateur et/ou être exécutées par un ordinateur afin de mettre en œuvre ces fonctions, unités fonctionnelles, entités ou étapes.

Les différents modes de réalisation et aspects décrits ci-dessous peuvent être combinés ou simplifiés de multiples manières. En particulier, les étapes des différents procédés peuvent être répétées pour chaque courrier électronique concerné et/ou chaque utilisateur concerné, les étapes peuvent être interverties, exécutées en parallèle, exécutées par différentes entités informatiques. Seuls certains modes de réalisation d'exemples sont décrits en détail pour assurer la clarté de l'exposé mais ces exemples ne visent pas à limiter la portée générale des principes ressortant de cette description considérée dans son ensemble.

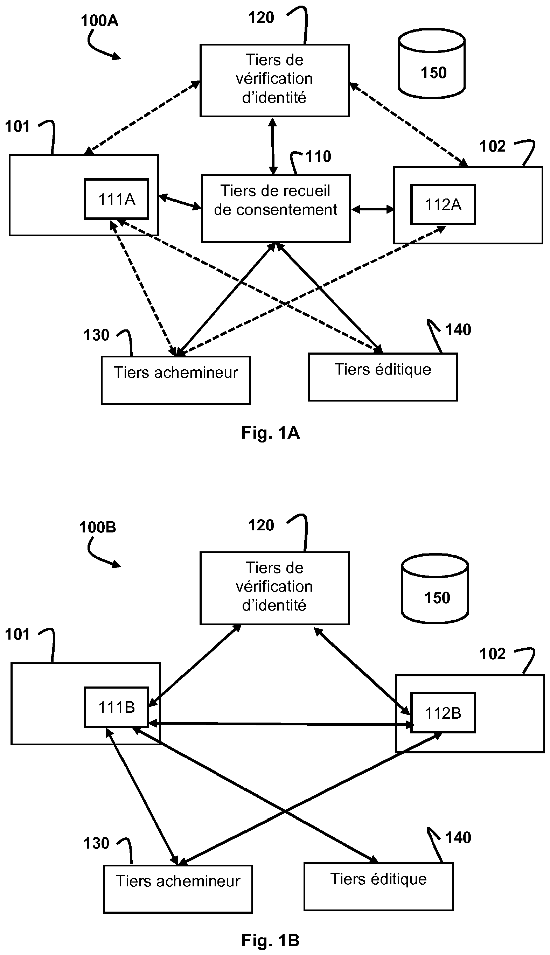

Un exemple de réalisation d'un système informatique 100A de recueil de consentement électronique pour un envoi de courrier recommandé électronique est illustré schématiquement par la figure 1A. Ce système informatique 100A comprend plusieurs sous-systèmes informatiques aptes à communiquer entre eux via un réseau de télécommunication: un terminal 101 d'un utilisateur expéditeur, un terminal 102 d'un utilisateur destinataire, un système informatique 110 d'un tiers de recueil de consentement, un système informatique 120 d'un tiers de vérification d'identité, un système informatique 130 d'un tiers achemineur et un système informatique 140 d'un tiers éditique. Le terminal 101 comprend au moins un logiciel 111A apte à communiquer avec au moins l'un des systèmes informatiques. Le terminal 102 comprend au moins un logiciel 112A apte à communiquer avec au moins l'un des systèmes informatiques.

Chaque système informatique 110, 120, 130, 140 peut être réalisé sous forme de serveur informatique. Chaque système informatique 110, 120, 130, 140 et chaque terminal 111A, 112A et chacune des étapes des procédés décrits ici peut être mis en œuvre par une ou plusieurs machines physiquement distinctes. Chaque système informatique 110, 120, 130, 140 et chaque terminal 111A, 112A présente globalement l'architecture d'un ordinateur, incluant des constituants d'une telle architecture: mémoire(s) de données, processeur(s), bus de communication, interface(s) utilisateur, interface(s) matérielle(s) pour la connexion de ce dispositif informatique à un réseau ou un autre équipement, etc.

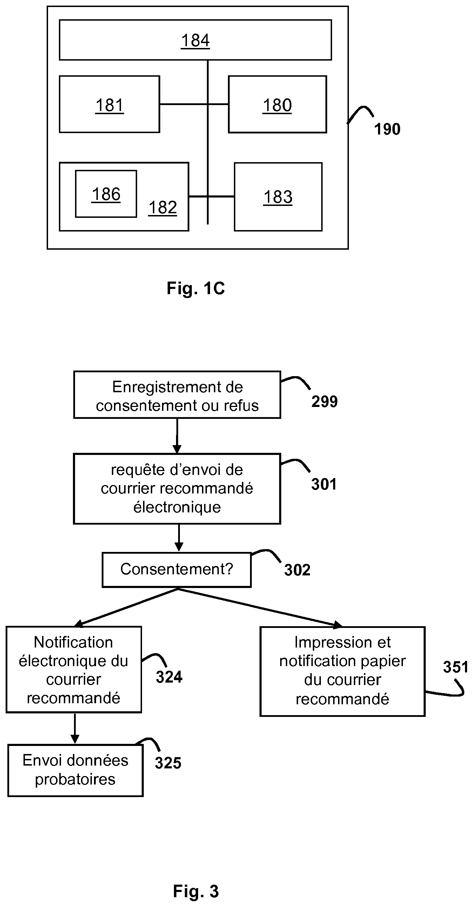

Un exemple de réalisation d'une telle architecture est illustré à la figure 1C. Cette architecture comprend une unité de traitement 180 incluant au moins un processeur de données, au moins une mémoire 181, un ou plusieurs support de stockage de données 182, et des interfaces hardware 183 telles que des interfaces réseaux, des interfaces pour la connexion de périphériques, au moins une interface utilisateur 184 incluant un ou plusieurs dispositifs d'entrée / sortie tels que souris, clavier, affichage, etc. Le support de stockage de données 182 comprend des instructions de code d'un programme d'ordinateur 186.

La mémoire 181 peut être une mémoire vive (RAM), une mémoire morte (ROM), une mémoire cache, une mémoire rémanente, une mémoire de sauvegarde (par exemple des mémoires programmables ou flash), des mémoires mortes ou n'importe quelle combinaison de celles-ci. L'unité de traitement 180 peut être n'importe quel microprocesseur, circuit intégré, ou unité centrale comportant au moins un processeur de traitement à base de matériel informatique.

Le système informatique 100A comprend en outre une base de données 150 pour l'enregistrement de consentements ou refus donnés par des utilisateurs pour une notification par voie électronique de courriers recommandés. Cette base de données sert de registre des consentements ou refus donnés : chaque consentement ou refus donné y est stocké par exemple sous forme de code (alphanumérique, numérique, etc) représentatif du refus ou consentement. Comme cela sera décrit plus en détail ci-dessous, d'autres données peuvent être stockées en association avec le code représentatif du refus ou consentement: notamment des données d'identifications du ou des utilisateurs expéditeurs et du ou des utilisateurs destinataires concernés par le refus ou consentement, et optionnellement une horodate (et/ou heure et/ou date) et/ou une durée de validité associée au consentement ou au refus.

La base de données 150 peut être interrogée par l'un quelconque des sous-systèmes informatiques, notamment par le système informatique 110 du tiers de recueil de consentement ou le système informatique 130 du tiers achemineur ou le logiciel 111A, 111B, 112A, 112B. La base de données peut être alimentée par le système informatique 110 du tiers de recueil de consentement ou le logiciel 111A, 111B, 112A, 112B lors de la mise en œuvre de l'un quelconque des procédés de recueil de consentement décrits ici afin d'y stocker le résultat d'une interrogation d'un utilisateur.

La base de données 150 peut également être alimentée directement par un utilisateur souhaitant déclarer spontanément (hors sollicitation par un tiers de recueil de consentement et en anticipation de requêtes d'envoi de courriers recommandés électroniques) s'il consent ou non à recevoir des courriers recommandés électroniques. Une telle déclaration peut être effectuée via un envoi de courriel à une adresse prédéterminée accessible par un serveur de traitement associé à la base de données 150, via une page d'un site web correspondant, par utilisation du logiciel 111A, 111B, 112A, 112B lorsqu'il est apte à communiquer avec la base de données 150 ou par toute autre méthode de communication avec la base de données 150.

Un autre exemple de réalisation d'un système informatique de recueil de consentement électronique pour un envoi de courrier recommandé électronique est illustré schématiquement par la figure 1B. Ce système informatique comprend plusieurs sous-systèmes informatiques aptes à communiquer entre eux via un réseau de télécommunication: un terminal 101 d'un utilisateur expéditeur, un terminal 102 d'un utilisateur destinataire, un système informatique 120 d'un tiers de vérification d'identité, un système informatique 130 d'un tiers achemineur et un système informatique 140 d'un tiers éditique. Le terminal 101 comprend au moins un logiciel 111B apte à communiquer avec au moins l'un des autres sous-systèmes informatiques. Le terminal 102 comprend au moins un logiciel 112B apte à communiquer avec au moins l'un des autres sous-systèmes informatiques. A la différence du système informatique représenté à la figure 1A, le logiciel 111B et/ou 112B est configuré pour remplir des fonctions du système informatique 110 de la figure 1A. Ainsi tout ou partie des fonctions du système informatique 110 de la figure 1A peuvent être mises en œuvre dans le logiciel 111B ou 112B.

Le système informatique 100B comprend également une base de données 150 pour l'enregistrement de consentements ou refus donnés par des utilisateurs : cette base de données présente les mêmes fonctions et propriétés que celle décrite par rapport à la figure 1A.

La base de données 150 peut être interrogée par le logiciel 111B ou 112B. La base de données peut être alimentée par le logiciel 111B ou 112B lors de la mise en œuvre de l'un quelconque des procédés de recueil de consentement décrits ici afin d'y stocker le résultat d'une interrogation d'un utilisateur ou d'une déclaration de consentement / refus effectuée spontanément par un utilisateur.

Les exemples de réalisation illustrés par les figures 1A et 1B ne sont pas limitatifs. Comme cela ressort de l'ensemble de cette description, la distribution des fonctions entre les systèmes informatiques et terminaux représentés aux figures 1A et 1B peut être modifiée de nombreuses manières, par exemple de sorte à regrouper les fonctions des systèmes informatiques 120, 110, 130 et 140 sur un seul système informatique ou au contraire à intégrer des fonctions de ces systèmes informatiques 120, 110, 130 et 140 dans un des logiciels 111A, 112A, 111B, 112B, ou encore à intégrer tout ou partie des fonctions du système informatique 110 dans un des autres systèmes informatiques 120, 110, 130 et 140.

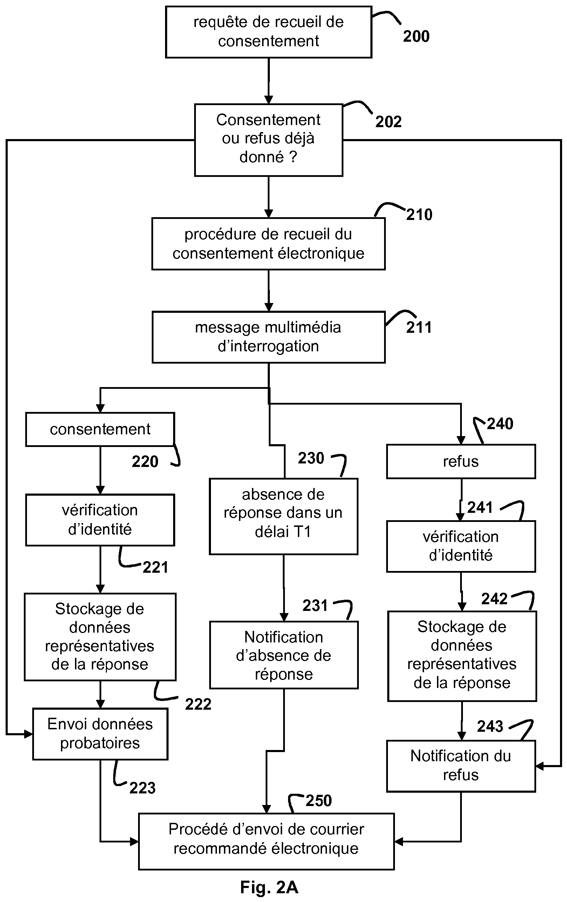

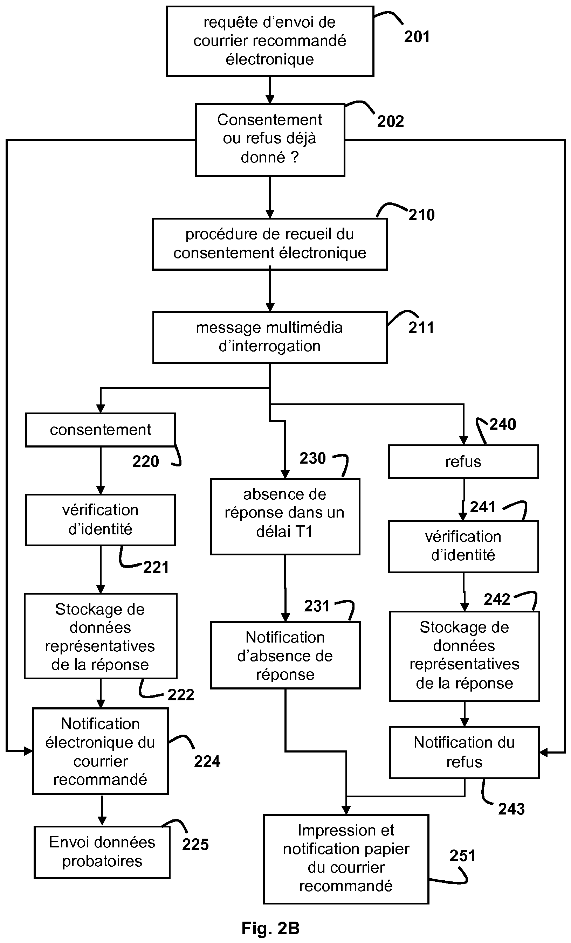

Des exemples de réalisation de procédés de recueil de consentement électronique et d'envoi de courrier recommandé électronique vont maintenant être décrits par référence aux figures 2A, 2B et 3. Dans tous ces exemples, un utilisateur expéditeur U1 (également désigné par utilisateur U1 ou expéditeur U1) souhaite faire parvenir un courrier recommandé électronique à un utilisateur destinataire U2 (également désigné par utilisateur U2 ou destinataire U2) et a, donc ce but besoin de recueillir son consentement préalablement à la remise électronique du courrier recommandé électronique.

Un exemple de réalisation d'un procédé de recueil de consentement électronique pour un envoi de courrier recommandé électronique est illustré schématiquement par la figure 2A. Bien que les étapes de ce procédé soient présentées de manière séquentielle, certaines au moins de ces étapes peuvent être omises ou bien être exécutées dans un ordre différent ou bien être exécutées en parallèle ou encore combinées pour ne former qu'une seule étape.

Les étapes du procédé de recueil de consentement électronique peuvent être mises en œuvre par un système de recueil de consentement selon la figure 1A dans lequel le système informatique 110 du tiers de recueil de consentement effectue des traitements sur demande d'un utilisateur expéditeur U1 et/ou du tiers de vérification d'identité en vue de recueillir le consentement d'un utilisateur destinataire U2.

Alternativement, les étapes du procédé de recueil de consentement électronique peuvent être mises en œuvre par un système de recueil de consentement selon la figure 1B, dans lequel le logiciel 111A mis en œuvre sur le terminal 101 de l'utilisateur expéditeur U1 remplit des fonctions identiques à celles du système informatique 110 en vue de recueillir le consentement d'un utilisateur destinataire U2, mais sans passer par un système informatique 110 de tiers de recueil de consentement, c'est-à-dire en communiquant directement avec le système informatique 120 du tiers de vérification d'identité, le système informatique 130 du tiers achemineur, le système informatique 140 du tiers éditique et le logiciel 112A mis en œuvre sur le terminal 102 de l'utilisateur destinataire U2. Pour simplifier, la description ci-dessous est faite dans le cas d'exemple d'une mise en œuvre par le système informatique 110 du tiers de recueil de consentement.

Lors d'une étape 200, l'expéditeur U1 formule une requête électronique R1 de recueil de consentement pour recueillir le consentement du destinataire U2 à recevoir un courrier recommandé électronique provenant de l'utilisateur expéditeur U1.

Cette requête R1 peut être formulée via une interface utilisateur d'un logiciel 111A exécutée sur le terminal 101, puis est transmise par ce logiciel 111A au système informatique 110 du tiers de recueil de consentement. Cette requête R1 peut être sous forme de courriel et provenir d'une première adresse électronique de contact de l'utilisateur expéditeur A. Cette requête R1 peut également être formulée via une page d'un site web géré par le système informatique 110 du tiers de recueil de consentement. Toute autre méthode de communication entre le terminal 101 et le système informatique 110 du tiers de recueil de consentement est envisageable. Le système informatique 110 effectue ensuite le traitement de cette requête.

Cette requête R1 peut être formulée via une interface utilisateur du logiciel 111B exécuté sur le terminal 101 de l'expéditeur U1. Ce logiciel 111B peut ensuite effectuer ensuite le traitement de cette requête.

Lorsqu'il formule la requête R1, l'utilisateur expéditeur U1 fournit, au système informatique du tiers de recueil de consentement et/ou au logiciel 111A, 111A, une adresse électronique de contact d'un utilisateur destinataire U2 auquel l'expéditeur U1 souhaite faire parvenir un envoi recommandé électronique. L'expéditeur U1 peut fournir également, au système informatique du tiers de recueil de consentement et/ou au logiciel 111A, 111B, une adresse postale du destinataire U2. Ainsi, dans un ou plusieurs modes de réalisation, la requête R1 indique une deuxième adresse électronique de contact de l'utilisateur destinataire U2 et/ou une adresse postale de l'utilisateur destinataire U2.

Dans le cadre de la présente description, une adresse électronique de contact peut être une adresse de messagerie type adresse de courriel conforme au protocole SMTP, une adresse de contact via un réseau social, un numéro de téléphone, une adresse IP associée à un dispositif dans un réseau, un identifiant utilisateur dans un système de messagerie, ou plus généralement des données de contact ou un identifiant permettant d'identifier un utilisateur dans un système de communication par voie électronique afin de lui adresser un message.

De retour à la figure 2A, le procédé de recueil de consentement comprend, dans un ou plusieurs modes de réalisation, une étape d'interrogation 202 par le système informatique 110 (ou respectivement, par le logiciel 111B) de la base de données de consentements 150 pour déterminer si un consentement ou un refus a déjà été donné par l'utilisateur destinataire U2 pour une notification par voie électronique d'un courrier recommandé provenant de utilisateur expéditeur U1. Optionnellement, si une durée de validité du consentement ou du refus est enregistrée dans la base de données de consentements 150, il est vérifié en outre si le consentement ou refus est toujours valable en déterminant si la durée de validité a expiré ou non. En cas de réponse affirmative à l'interrogation de l'étape 202, l'étape 223 est exécutée suite à l'étape 202 si un consentement a été signifié (et, optionnellement, est toujours valable) et l'étape 243 est exécutée suite à l'étape 202 si un refus a été signifié (et, optionnellement, est toujours valable).

Dans un ou plusieurs modes de réalisation, en cas de réponse négative à l'interrogation de l'étape 202, c'est-à-dire en cas d'absence de consentement ou refus en cours de validité, le procédé de recueil de consentement comprend une étape de déclenchement 210 par le système informatique 110 (ou respectivement, par le logiciel 111B) d'une procédure de recueil de consentement électronique auprès de l'utilisateur destinataire U2 sur la base des informations contenue dans la requête formulée à l'étape 200. Cette procédure correspond à un sous-ensemble d'étapes, c'est-à-dire une phase, du procédé de recueil de consentement. Des modes de réalisation d'une procédure de recueil de consentement électronique sont décrits plus en détails ci-dessous.

Dans un ou plusieurs modes de réalisation, suite à la procédure de recueil de consentement électronique, un procédé d'envoi de courrier recommandé électronique est mis en œuvre lors d'une étape 250 , par exemple par le système informatique 110 ou le système informatique 130: des exemples de réalisation d'un procédé d'envoi de courrier recommandé électronique sont décrits par référence à la figure 2B et à la figure 3.

Le procédé de recueil de consentement décrit par référence à la figure 2A peut être mis en œuvre indépendamment d'une notification par voie électronique d'un courrier recommandé électronique, par exemple en prévision de courriers recommandés électroniques futurs à notifier par voie électronique. Ainsi, toute méthode de notification par voie électronique d'un courrier recommandé électronique peut être utilisée lors de l'étape 250.

### Procédure de recueil de consentement

Dans un ou plusieurs modes de réalisation, la procédure de recueil de consentement électronique comprend au moins une des étapes 211 à 243 décrites ci-dessous. Les étapes peuvent être mises en œuvre par un ou plusieurs des systèmes informatiques 110, 120, 130, 140 du tiers de recueil de consentement, du tiers de vérification d'identité, du tiers achemineur, du tiers éditique ou par un des logiciels 111A et 112A ou 111B et 112B. Pour simplifier, la description qui suit est faite dans le cas d'exemple d'une mise en œuvre par le système informatique 110 du tiers de recueil de consentement.

Dans un ou plusieurs modes de réalisation, la procédure de recueil de consentement électronique comprend un envoi 211, par le système informatique 110, à la deuxième adresse électronique de contact d'un message multimédia MM d'interrogation de l'utilisateur destinataire.

Le message multimédia MM est un message électronique. Le message multimédia MM peut être un courriel, un message texte (SMS par exemple), un message vocal, un message audio et/ou vidéo, un message texte et vidéo, etc. Le message multimédia MM peut être transmis par tout moyen et système de télécommunication.

Le message multimédia MM peut être anonyme ou, au contraire, identifier l'expéditeur U1, voire être personnalisé avec un message personnalisé de l'expéditeur U1 à l'intention du destinataire U2. Dans au moins un mode de réalisation, le message multimédia MM informe l'utilisateur destinataire qu'un utilisateur expéditeur souhaite lui faire parvenir un courrier recommandé électronique, que son consentement est requis à cette fin et qu'une procédure de vérification d'identité est prévue pour le destinataire U2. Dans au moins un mode de réalisation, le message multimédia d'interrogation comprend ainsi une identification de l'utilisateur expéditeur U1. Cette identification peut être sous forme d'adresse électronique de contact ou bien encore par nom et adresse postale.

Dans au moins un mode de réalisation, le message multimédia MM comprend des données de recueil de réponse pour répondre au message multimédia MM. La réponse au message multimédia MM peut être donnée en répondant au message multimédia MM ou en utilisant le contenu du message multimédia MM, par exemple via un site Web, ou encore par une méthode indiquée dans le message multimédia MM. La réponse peut par exemple être donnée par le biais d'échanges téléphoniques avec un agent automatisé ou par l'échange de messages texte (par exemple par SMS, Short Message Service) ou message image (par exemple par MMS, multimédia message service).

Les données de recueil de réponse peuvent comprendre par exemple un ou plusieurs liens hypertextes à activer pour déclencher l'envoi au système informatique 110 d'une réponse au message multimédia MM. Le lien hypertexte peut déclencher directement l'envoi d'un message de réponse ou rediriger le destinataire U2 vers une page d'un site Web via laquelle le destinataire U2 pourra donner sa réponse.

Les données de recueil de réponse peuvent comprendre une ou plusieurs adresses électroniques (adresse de courriel, numéro de téléphone, numéro court, etc) à laquelle envoyer une réponse au message multimédia MM. Les données de recueil de réponse peuvent comprendre par exemple un ou plusieurs boutons à cliquer, des menus déroulants, du texte à taper ou autre élément d'interface utilisateur servant à déclencher une action pour répondre au message multimédia MM ou envoyer directement une réponse au message multimédia MM. Toute autre méthode permettant au destinataire d'indiquer son choix et d'envoyer une réponse au message multimédia MM est utilisable.

Par exemple, les données de recueil de réponse comprennent un premier lien hypertexte à activer pour déclencher un envoi d'une réponse positive et un deuxième lien hypertexte, distinct du premier lien hypertexte, à activer pour déclencher un envoi d'une réponse négative au message multimédia MM.

Par exemple, les données de recueil de réponse comprennent des premières données de recueil d'une réponse positive et des deuxièmes données de recueil d'une réponse négative utilisables indépendamment des premières données.

Dans au moins un mode de réalisation, le message multimédia MM comprend des données de vérification d'identité pour déclencher la procédure de vérification d'identité, afin notamment de mettre en communication l'utilisateur destinataire U2 avec un système informatique 120 d'un tiers de vérification d'identité.

Ces données de vérification d'identité peuvent comprendre par exemple un ou plusieurs liens hypertextes à activer pour déclencher l'envoi, au système informatique 120 d'un tiers de vérification d'identité, de données d'identification et/ou d'authentification. Le lien hypertexte peut déclencher directement l'envoi des données d'identification et/ou d'authentification ou rediriger le destinataire U2 vers une page d'un site Web via laquelle le destinataire U2 pourra fournir des données d'identification et/ou d'authentification.

Les données de vérification d'identité peuvent comprendre une ou plusieurs adresses électroniques (adresse de courriel, numéro de téléphone, numéro court, etc) à laquelle envoyer des données d'identification et/ou d'authentification. Les données de vérification d'identité peuvent comprendre par exemple un ou plusieurs boutons à cliquer, des menus déroulants, du texte à taper ou autre élément d'interface utilisateur servant à déclencher un envoi de données d'identification et/ou d'authentification. Toute autre méthode permettant au destinataire U2 d'envoyer au système informatique 120 d'un tiers de vérification des données d'identification et/ou d'authentification est utilisable.

Suite à l'étape 211, une des étapes 220, 230 ou 240 peut être exécutée selon la réponse ou l'absence de réponse au message multimédia MM.

### Cas d'une réponse positive

Dans un ou plusieurs modes de réalisation, la procédure de recueil de consentement électronique comprend, suite à l'étape 211, une réception 220, par le système informatique 110, d'une réponse positive au message multimédia par laquelle le destinataire U2 signifie son consentement. Dans un ou plusieurs modes de réalisation, la procédure de recueil de consentement électronique comprend un horodatage de la réponse.

Dans un ou plusieurs modes de réalisation, la procédure de recueil de consentement électronique comprend un déclenchement 221 par le système informatique 110 d'une procédure de vérification d'identité de l'utilisateur destinataire et une réception par le système informatique 110 d'un résultat de la procédure de vérification d'identité. Cette procédure correspond à un sous-ensemble d'étapes, c'est-à-dire une phase, du procédé de recueil de consentement.

Les étapes 220 et 221 peuvent être exécutées l'une après l'autre, la procédure de vérification d'identité pouvant être effectuée avant ou après l'envoi ou la réception de la réponse au message multimédia. Alternativement, les étapes 220 et 221 peuvent être exécutées en parallèles ou concomitamment, la procédure de vérification d'identité pouvant par exemple inclure une sous-étape de traitement de la réponse.

Dans un ou plusieurs modes de réalisation, la procédure de recueil de consentement électronique comprend une réception et un stockage d'un résultat de la procédure de vérification d'identité exécutée à l'étape 221. Ce résultat comprend par exemple une information binaire indiquant si l'identité a été vérifiée ou non et/ou des données d'identification et/ou d'authentification de l'utilisateur destinataire résultant de la procédure de vérification d'identité et/ou une identification de la procédure de vérification d'identité utilisée. Ce résultat peut comprendre des données d'identification de l'utilisateur destinataire vérifiées, voire signées numériquement et/ou chiffrées numériquement, par exemple par le système informatique du tiers de vérification d'identité.

Des modes de réalisation d'une procédure de vérification d'identité sont décrits plus en détail ci-dessous.

Dans un ou plusieurs modes de réalisation, la procédure de recueil de consentement électronique comprend un stockage lors de l'étape 222, dans au moins une base de données (par exemple dans la base de données de consentement 150 ou une base de données du tiers de recueil de consentement), de données numériques représentatives de la réponse donnée à l'étape 220.

Les données numériques représentatives de la réponse comprennent (ou sont stockées en association avec) des données d'identification du destinataire U2 résultant de la procédure de vérification d'identité déclenchée à l'étape 221 et/ou la première adresse électronique de contact de l'expéditeur U1 et/ou la deuxième adresse électronique de contact du destinataire U2 et/ou une horodate (ou date) de réception ou d'émission de la réponse au message multimédia.

En cas de réponse positive, les données numériques représentatives du consentement peuvent comprendre en outre des informations précisant la réponse donnée, par exemple :
- une information indiquant si le consentement est définitif ou temporaire, et dans ce dernier cas, la durée pour laquelle ce consentement est valable ; et/ou
- une information indiquant si le consentement est valable uniquement pour l'expéditeur U1 ou pour un ensemble d'expéditeurs ou pour tout expéditeur.

Dans le cas où le consentement est signifié pour l'expéditeur U1 ou pour un ensemble d'expéditeurs, une identification de ces expéditeurs est mémorisée dans ou en association avec les données numériques représentatives de la réponse. Cette identification peut prendre la forme d'une adresse électronique de contact ou une identification par le nom et l'adresse postale d'une personne physique ou morale, ou tout autre moyen permettant d'identifier les expéditeurs concernés. Pour un ensemble d'expéditeurs, par exemple pour les expéditeurs d'une personne morale donnée (société X), cette identification peut prendre la forme d'une identification d'un serveur de messagerie de la société ou une identification par le nom et l'adresse postale de la société X.

Dans le cas d'un consentement temporaire associé à une durée de validité, l'étape 211 d'interrogation et les étapes subséquentes 220 à 223 ne seront plus exécutées pour les requêtes de recueil de consentement émises pendant la durée de validité du consentement et exécutées à nouveau en cas de nouvelle requête de recueil de consentement après expiration de la durée de validité du consentement. On peut ainsi éviter des envois de messages d'interrogation inutiles pendant la durée de validité du consentement ou n'interroger le destinataire U2 que pour des expéditeurs ne figurant pas dans l'ensemble d'expéditeurs associé à un consentement ou à un refus.

Dans un ou plusieurs modes de réalisation, la procédure de recueil de consentement électronique comprend, en cas de réception à l'étape 220 d'une réponse positive au message multimédia, un horodatage de la réponse et un stockage d'une horodate ou date en association avec les données représentatives du consentement.

Dans un ou plusieurs modes de réalisation, la procédure de recueil de consentement électronique comprend, lors de l'étape 223, un envoi à l'expéditeur U1 d'une notification du consentement signifié par l'utilisateur destinataire et/ou une mise à disposition 223 de l'expéditeur U1 de données probatoires représentatives du consentement signifié par l'utilisateur destinataire. L'étape 223 est mise en œuvre en cas de réception de la réponse positive à l'étape 220. Dans un ou plusieurs modes de réalisation, l'étape 223 est mise en œuvre uniquement en cas de résultat positif de la procédure de vérification d'identité.

La mise à disposition peut consister en un envoi par message électronique des données probatoires. La mise à disposition peut également consister en un envoi à l'utilisateur destinataire d'un lien hypertexte pour télécharger les données probatoires. La mise à disposition peut également consister à rendre accessible ces données probatoires via un compte utilisateur et une application web. Toute autre méthode de mise à disposition est applicable.

Les données probatoires sont des données numériques. Elles peuvent être identiques ou différentes des données numériques représentatives de la réponse stockées à l'étape 222. Les données probatoires comprennent (ou sont stockées en association avec) des données d'identification du destinataire U2 résultant de la procédure de vérification d'identité déclenchée à l'étape 221 et/ou la première adresse électronique de contact de l'expéditeur U1 et/ou la deuxième adresse électronique de contact du destinataire U2 et/ou une horodate (ou date) de réception ou d'émission de la réponse au message multimédia. Les données probatoires comprennent par exemple une information (codée dans un format binaire ou texte) représentative du consentement ou respectivement du refus, les adresses électroniques de l'expéditeur et du destinataire concernés, une date à laquelle le consentement / refus a été signifié et une version électronique de conditions générales d'utilisation du service de recueil de consentement tel que mis en œuvre par le tiers de recueil de consentement et décrit dans ce document.

Les données probatoires peuvent être signées numériquement par un système informatique d'un tiers de confiance (qui peut être le tiers de recueil de consentement, le tiers de vérification d'identité, le tiers achemineur ou tout autre tiers de confiance), au moyen par exemple d'un programme informatique d'un des systèmes informatiques 110, 130 ou du logiciel 111B ou 112B, afin d'en garantir l'intégrité et de permettre la vérification par ce tiers de confiance de ces données probatoires et/ ou de leur intégrité.

Dans un ou plusieurs modes de réalisation, la procédure de recueil de consentement électronique comprend en outre un stockage dans au moins une base de données (par exemple dans la base de données de consentement 150 ou une base de données du tiers de recueil de consentement) des données numériques représentatives de la réponse au message multimédia MM et/ou des données probatoires représentatives du consentement, utilisables par l'expéditeur pour établir la preuve du consentement.

Dans un ou plusieurs modes de réalisation, la procédure de recueil de consentement électronique se termine par l'étape 223 et l'étape 250 est exécutée suite à l'étape 223.

### Cas d'une réponse négative

Dans un ou plusieurs modes de réalisation, la procédure de recueil de consentement électronique comprend, suite à l'étape 211, une réception 240, par le système informatique du tiers de recueil de consentement, d'une réponse négative au message multimédia par laquelle le destinataire U2 signifie son refus d'être notifiée par voie électronique d'un courrier recommandé. Dans un ou plusieurs modes de réalisation, la procédure de recueil de consentement électronique comprend un horodatage de la réponse.

Dans un ou plusieurs modes de réalisation, la procédure de recueil de consentement électronique comprend un déclenchement 241 par le système informatique 110 d'une procédure de vérification d'identité de l'utilisateur destinataire et une réception par le système informatique 110 d'un résultat de la procédure de vérification d'identité. Cette procédure correspond à un sous-ensemble d'étapes, c'est-à-dire une phase, du procédé de recueil de consentement. Le résultat comprend par exemple une information binaire indiquant si l'identité a été vérifiée ou non et/ou des données d'identification et/ou d'authentification de l'utilisateur destinataire résultant de la procédure de vérification d'identité et/ou une identification de la procédure de vérification d'identité utilisée. Ce résultat peut comprendre des données d'identification de l'utilisateur destinataire vérifiées, voire signées numériquement, par exemple par le système informatique du tiers de vérification d'identité.

La procédure de vérification d'identité déclenchée à l'étape 241 en cas de réponse négative peut être identique à celle déclenchée à l'étape 221 en cas de réponse positive au message multimédia. Dans un ou plusieurs modes de réalisation, la procédure de vérification d'identité déclenchée à l'étape 241 en cas de réponse négative peut être simplifiée ou allégée par rapport à la procédure de vérification d'identité déclenchée à l'étape 221 en cas de réponse positive. Par exemple, une authentification forte peut être prévue lors de l'étape 221, mais une authentification faible peut suffire dans l'étape 241.

Des modes de réalisation d'une procédure de vérification d'identité sont décrits plus en détail ci-dessous.

Les étapes 240 et 241 peuvent être exécutées l'une après l'autre, la procédure de vérification d'identité pouvant être effectuée avant ou après l'envoi ou la réception de la réponse au message multimédia. Alternativement, les étapes 240 et 241 peuvent être exécutées en parallèles ou concomitamment, la procédure de vérification d'identité pouvant par exemple inclure une étape de recueil de la réponse.

Dans un ou plusieurs modes de réalisation, la procédure de recueil de consentement électronique comprend une réception et un stockage d'un résultat de la procédure de vérification d'identité exécutée à l'étape 241. Ce résultat comprend par exemple des données d'identification et/ou d'authentification de l'utilisateur destinataire résultant de la procédure de vérification d'identité et/ou une identification de la procédure de vérification d'identité utilisée.

Dans un ou plusieurs modes de réalisation, la procédure de recueil de consentement électronique comprend un stockage lors de l'étape 242 dans au moins une base de données (par exemple dans la base de données de consentement 150 ou une base de données du tiers de recueil de consentement), de données numériques représentatives de la réponse donnée à l'étape 240.

Les données numériques représentatives de la réponse comprennent ou sont stockées en association avec des données d'identification du destinataire U2 résultant de la procédure de vérification d'identité déclenchée à l'étape 241 et/ou la première adresse électronique de contact de l'expéditeur U1 et/ou la deuxième adresse électronique de contact du destinataire U2 et/ou une horodate (ou date) de réception ou d'émission de la réponse au message multimédia.

En cas de réponse négative, les données numériques représentatives du refus peuvent comprendre en outre des informations précisant la réponse donnée, par exemple :
- une information indiquant si le refus est un refus définitif ou temporaire, et dans ce dernier cas, la durée pour laquelle ce refus est valable ; et/ou
- une information indiquant si le refus est valable uniquement pour l'expéditeur U1 ou pour un ensemble d'expéditeurs ou pour tout expéditeur.

Dans le cas où le refus est signifié pour l'expéditeur U1 ou pour un ensemble d'expéditeurs, une identification de ces expéditeurs est mémorisée dans ou en association avec les données numériques représentatives de la réponse. Cette identification peut prendre la forme d'une adresse électronique de contact ou une identification par le nom et l'adresse postale ou tout autre moyen permettant d'identifier les expéditeurs concernés. Pour un ensemble d'expéditeurs, par exemple pour les expéditeurs d'une société donnée, cette identification peut prendre la forme d'une identification d'un serveur de messagerie de la société ou une identification par le nom et l'adresse postale de la société.

Dans un ou plusieurs modes de réalisation, la procédure de recueil de consentement électronique comprend, lors de l'étape 243, un envoi à l'expéditeur U1 d'une notification du refus signifié par l'utilisateur destinataire et/ou une mise à disposition de données numériques représentatives du refus. L'étape 243 est mise en œuvre en cas de réception de la réponse négative à l'étape 240. Dans un ou plusieurs modes de réalisation, l'étape 243 est mise en œuvre uniquement en cas de résultat positif de la procédure de vérification d'identité à l'étape 241.

La mise à disposition peut consister en un envoi par message électronique des données numériques représentatives du refus. La mise à disposition peut également consister en un envoi à l'utilisateur destinataire d'un lien hypertexte pour télécharger les données numériques représentatives du refus. La mise à disposition peut également consister à rendre accessible ces données numériques représentatives du refus via un compte utilisateur et une application web. Toute autre méthode de mise à disposition est applicable.

Dans le cas d'un refus temporaire associé à une durée de validité, l'étape 211 d'interrogation et les étapes subséquentes 240 à 243 ne seront plus exécutées pour les requêtes de recueil de consentement émises pendant la durée de validité du refus et exécutées à nouveau en cas de nouvelle requête de recueil de consentement après expiration de la durée de validité du refus. On peut ainsi éviter des envois de messages inutiles pendant la durée de validité du refus ou n'interroger le destinataire U2 que pour des expéditeurs ne figurant pas dans l'ensemble d'expéditeurs associé à un refus ou à un consentement.

Dans un ou plusieurs modes de réalisation, les étapes 240 à 243 ne sont pas exécutées, le message multimédia ne donnant pas au destinataire la possibilité de refuser une notification par voie électronique d'un courrier recommandé. A défaut de réponse, les étapes 230 et 231 décrites ci-dessous sont exécutées. Dans ce cas, le consentement est implicite en cas de réponse au message multimédia MM.

Dans un ou plusieurs modes de réalisation, la procédure de recueil de consentement électronique se termine par l'étape 243 et l'étape 250 est exécutée suite à l'étape 243.

### Cas d'une absence de réponse

Dans un ou plusieurs modes de réalisation, la procédure de recueil de consentement électronique comprend le déclenchement 230 d'une temporisation suite à l'envoi du message multimédia MM de sorte à détecter l'expiration d'un premier délai d'attente T1 après l'envoi du message multimédia MM et l'absence de réponse dans le délai d'attente T1. Le message multimédia peut indiquer au destinataire U2 le délai d'attente T1 ou une date et/ou heure limite de réponse correspondante. Ceci permet de traiter, de manière automatisée et sans délai supplémentaire, en cas d'absence de réponse, la requête de recueil de consentement, voire de prévoir une remise du courrier recommandé sous forme papier selon ce qui est décrit par exemple par référence à la figure 3 (étape 351).

Le délai d'attente T1 peut être un délai par défaut ou un délai spécifié par l'expéditeur U1, par exemple dans la requête de recueil de consentement. Par ailleurs, ce délai peut être spécifié manuellement par saisie d'une valeur (date limite ou durée) ou par sélection dans un ensemble de délais possibles ou par saisie d'une date limite.

Dans un ou plusieurs modes de réalisation, la procédure de recueil de consentement électronique comprend, lors de l'étape 231, un envoi 231 à l'utilisateur expéditeur, en cas de non réception par le système informatique 110 dans le premier délai d'attente T1 d'une réponse de l'utilisateur destinataire au message multimédia, d'une notification d'absence de réception de consentement de l'utilisateur destinataire et/ou une mise à disposition de données numériques représentatives de l'absence de réponse. Les données numériques représentatives de l'absence de réponse peuvent comprendre la durée d'attente écoulée et/ou un message d'information sur l'absence de réponse et/ou une identification de l'utilisateur destinataire sollicité et/ou une date d'envoi du message multimédia.

La mise à disposition peut consister en un envoi par message électronique des données numériques représentatives de l'absence de réponse. La mise à disposition peut également consister en un envoi à l'utilisateur destinataire d'un lien hypertexte pour télécharger les données numériques représentatives de l'absence de réponse. La mise à disposition peut également consister à rendre accessible les données numériques représentatives de l'absence de réponse via un compte utilisateur et une application web. Toute autre méthode de mise à disposition est applicable.

Dans un ou plusieurs modes de réalisation, la procédure de recueil de consentement électronique se termine par l'étape 231 et l'étape 250 est exécutée suite à l'étape 231.

### Procédé d'envoi de courrier recommandé électronique (première variante de réalisation)

Un exemple de réalisation d'un procédé d'envoi de courrier recommandé électronique est illustré schématiquement par la figure 2B. Bien que les étapes de ce procédé soient présentées de manière séquentielle, certaines au moins de ces étapes peuvent être omises ou bien être exécutées dans un ordre différent ou bien être exécutées en parallèle ou encore combinées pour ne former qu'une seule étape.

Dans cet exemple de réalisation d'un procédé d'envoi de courrier recommandé électronique, le consentement du destinataire U2 (étapes 220 à 223) est une condition de déclenchement du traitement (étapes 224 et 225), par un tiers achemineur, du courrier recommandé électronique en vue de sa notification par voie électronique. De même, le refus du destinataire U2 (étapes 240 à 243) ou son absence de réponse (étapes 230 à 231) est une condition de déclenchement du traitement (étape 251), par un tiers éditique, du courrier recommandé électronique en vue de sa notification et remise par voie papier au destinataire.

Les étapes du procédé d'envoi de courrier recommandé électronique peuvent être mises en œuvre par un système de recueil de consentement selon la figure 1A dans lequel le système informatique 110 du tiers de recueil de consentement effectue des traitements sur demande d'un utilisateur expéditeur U1 et/ou du tiers de vérification d'identité en vue de recueillir le consentement d'un utilisateur destinataire U2.

Alternativement, les étapes du procédé d'envoi de courrier recommandé électronique peuvent être mises en œuvre par un système de recueil de consentement selon la figure 1B, dans lequel le logiciel 111A mis en œuvre sur le terminal 101 de l'utilisateur expéditeur U1 remplit des fonctions identiques à celles du système informatique 110 en vue de recueillir le consentement d'un utilisateur destinataire U2, mais sans passer par un système informatique 110 de tiers de recueil de consentement, c'est-à-dire en communiquant directement avec le système informatique 120 du tiers de vérification d'identité, le système informatique 130 du tiers achemineur, le système informatique 140 du tiers éditique et le logiciel 112A mis en œuvre sur le terminal 102 de l'utilisateur destinataire U2. Pour simplifier, la description ci-dessous est faite dans le cas d'exemple d'une mise en œuvre par le système informatique 110 du tiers de recueil de consentement.

Lors d'une étape 201, un utilisateur expéditeur U1 formule une requête électronique R2 d'envoi d'un courrier recommandé électronique à un utilisateur destinataire U2.

Dans le cas du mode de réalisation de la figure 1A, cette requête R2 est formulée via une interface utilisateur d'un logiciel 111A exécutée sur le terminal 101, puis est transmise par ce logiciel 111A au système informatique 110 du tiers de recueil de consentement. Cette requête peut être sous forme de courriel, adressée à une adresse de courriel accessible par le système informatique 110 et provient d'une première adresse électronique de contact de l'utilisateur expéditeur A. Cette requête R2 peut également être formulée via une page d'un site web géré par le système informatique 110 du tiers de recueil de consentement. Toute autre méthode de communication entre le terminal 101 et le système informatique 110 du tiers de recueil de consentement est envisageable. Le système informatique 110 effectue ensuite le traitement de cette requête R2.

Dans le cas du mode de réalisation de la figure 1B, cette requête R2 est formulée via une interface utilisateur du logiciel 111B exécuté sur le terminal 101 de l'expéditeur U1. Ce logiciel 111B effectue ensuite le traitement de cette requête.

Lorsqu'il formule la requête, l'utilisateur expéditeur U1 fournit, au système informatique du tiers de recueil de consentement et/ou au logiciel 111A, 111A, une adresse électronique de contact d'un utilisateur destinataire U2 auquel l'expéditeur U1 souhaite faire parvenir un envoi recommandé électronique. L'expéditeur U1 peut fournir également, au système informatique du tiers de recueil de consentement et/ou au logiciel 111A, 111B, une adresse postale du destinataire U2. Ainsi, dans un ou plusieurs modes de réalisation, la requête R2 indique une deuxième adresse électronique de contact de l'utilisateur destinataire et/ou une adresse postale de l'utilisateur destinataire U2 et comprend un courrier électronique à envoyer.

Dans un ou plusieurs modes de réalisation, le procédé d'envoi de courrier recommandé électronique comprend les étapes 202, 210 à 211, 220 à 222, 230 à 231, 240 à 243, ces étapes étant identiques à celles décrites par référence à la figure 2A. L'étape 223 n'est cependant pas exécutée mais remplacée par des étapes 224 et 225.

Dans un ou plusieurs modes de réalisation, le procédé d'envoi de courrier recommandé électronique comprend, suite à l'étape 222, une remise 224 par voie électronique à l'utilisateur destinataire U2 du courrier recommandé électronique.

Dans un ou plusieurs modes de réalisation, le procédé d'envoi de courrier recommandé électronique comprend, lors de l'étape 225 exécutée suite à l'étape 224, un envoi à l'expéditeur U1, d'une notification pour notifier l'utilisateur expéditeur U1 à la fois de la remise par voie électronique du courrier recommandé et du consentement signifié par l'utilisateur destinataire U2 et/ou une mise à disposition de données probatoires représentatives à la fois de la remise par voie électronique et du consentement signifié par l'utilisateur destinataire.

La mise à disposition peut consister en un envoi par message électronique des données probatoires. La mise à disposition peut également consister en un envoi à l'utilisateur destinataire d'un lien hypertexte pour télécharger les données probatoires. La mise à disposition peut également consister à rendre accessible les données probatoires via un compte utilisateur et une application web. Toute autre méthode de mise à disposition est applicable.

Les données probatoires sont utilisables par l'expéditeur pour établir la preuve à la fois de la remise par voie électronique et du consentement signifié par l'utilisateur destinataire. L'étape 225 est mise en œuvre en cas de réception de la réponse positive à l'étape 220. Dans un ou plusieurs modes de réalisation, l'étape 225 est mise en œuvre uniquement en cas de résultat positif de la procédure de vérification d'identité.

Les données probatoires sont des données numériques. Elles peuvent être identiques ou différentes des données numériques représentatives de la réponse stockées à l'étape 222. Les données probatoires comprennent (ou sont stockées en association avec) :
- des données d'identification du destinataire U2 résultant de la procédure de vérification d'identité déclenchée à l'étape 221 et/ou
- la première adresse électronique de contact de l'expéditeur U1 et/ou
- la deuxième adresse électronique de contact du destinataire U2 et/ou
- une horodate (ou date) de réception ou d'émission de la réponse au message multimédia et/ou
- une horodate (ou date) de remise du courrier recommandé électronique et/ou
- une signature électronique de l'utilisateur destinataire U2.

Les données probatoires comprennent par exemple une information codée dans un format binaire ou texte représentative du consentement, les adresses électroniques de l'expéditeur et du destinataire concernés, une date à laquelle le consentement a été signifié, une date à laquelle le courrier recommandé a été signifié par voie électronique, et / ou une version électronique de conditions générales d'utilisation du service d'envoi de courrier recommandé électronique tel que décrit ici.

Les données probatoires peuvent être signées numériquement par un système informatique d'un tiers de confiance (qui peut être le tiers de recueil de consentement, le tiers de vérification d'identité, le tiers achemineur ou tout autre tiers de confiance), au moyen par exemple d'un programme informatique d'un des systèmes informatiques 110, 130 ou du logiciel 111B ou 112B, afin d'en garantir l'intégrité et de permettre la vérification par ce tiers de confiance de ces données probatoires.

Dans un ou plusieurs modes de réalisation, le procédé d'envoi de courrier recommandé électronique comprend en outre, lors de l'étape 225, un stockage dans au moins une base de données (par exemple dans la base de données de consentement 150 ou une base de données du tiers de recueil de consentement ou une base de données du tiers achemineur) des données probatoires.

Dans un ou plusieurs modes de réalisation, le procédé d'envoi de courrier recommandé électronique comprend, suite à l'étape 231 ou 243, un déclenchement 251 d'une mise en œuvre, par un système informatique d'un tiers éditique, d'un procédé d'envoi de courrier recommandé sous forme papier. Ce procédé d'envoi de courrier recommandé sous forme papier comprend par exemple : un envoi du courrier électronique au tiers éditique, une impression sur papier du courrier électronique et un envoi par voie postale du courrier papier en recommandé à l'utilisateur destinataire U2.

Toute autre méthode de notification par voie électronique d'un courrier recommandé électronique peut être utilisée en lieu et place des étapes 224, 225 et 251 décrites ci-dessus.

### Procédé d'envoi de courrier recommandé électronique (deuxième variante de réalisation)

Un exemple de réalisation d'un procédé d'envoi de courrier recommandé électronique est illustré schématiquement par la figure 3. Bien que les étapes de ce procédé soient présentées de manière séquentielle, certaines au moins de ces étapes peuvent être omises ou bien être exécutées dans un ordre différent ou bien être exécutées en parallèle ou encore combinées pour ne former qu'une seule étape.

Les étapes du procédé d'envoi de courrier recommandé électronique peuvent être mises en œuvre par un système de recueil de consentement selon la figure 1A dans lequel le système informatique 110 du tiers de recueil de consentement effectue des traitements sur demande d'un utilisateur expéditeur U1 et/ou du tiers de vérification d'identité en vue de recueillir le consentement d'un utilisateur destinataire U2.

Alternativement, les étapes du procédé d'envoi de courrier recommandé électronique peuvent être mises en œuvre par un système de recueil de consentement selon la figure 1B, dans lequel le logiciel 111A mis en œuvre sur le terminal 101 de l'utilisateur expéditeur U1 remplit des fonctions identiques à celles du système informatique 110 en vue de recueillir le consentement d'un utilisateur destinataire U2, mais sans passer par un système informatique 110 de tiers de recueil de consentement, c'est-à-dire en communiquant directement avec le système informatique 120 du tiers de vérification d'identité, le système informatique 130 du tiers achemineur, le système informatique 140 du tiers éditique et le logiciel 112A mis en œuvre sur le terminal 102 de l'utilisateur destinataire U2. Pour simplifier, la description ci-dessous est faite dans le cas d'exemple d'une mise en œuvre par le système informatique 110 du tiers de recueil de consentement.

Dans un ou plusieurs modes de réalisation, le procédé d'envoi de courrier recommandé électronique comprend un enregistrement et stockage 299 dans au moins une base de données (par exemple dans la base de données de consentement 150 ou une base de données du tiers de recueil de consentement), de données numériques représentatives d'au moins un consentement ou refus donné par un utilisateur destinataire pour une notification par voie électronique d'un courrier recommandé provenant d'un ensemble d'au moins un utilisateur expéditeur.

L'enregistrement de l'étape 299 peut être consécutif à une réponse donnée à un message multimédia MM envoyé lors de l'étape 211 du procédé décrit par référence à la figure 2A ou 2B ou bien être consécutif à une requête d'enregistrement de consentement ou refus émise par l'utilisateur destinataire.

Comme déjà décrit, une telle base de données sert de registre de consentement et peut avoir été alimentée lors de la mise en œuvre de l'un quelconque des procédés de recueil de consentement décrits dans ce document afin d'y stocker le résultat d'une interrogation d'un utilisateur ou avoir été alimentée directement par un utilisateur souhaitant déclarer spontanément (hors sollicitation par un tiers de recueil de consentement et en anticipation de requêtes d'envoi de courriers recommandés électroniques) qu'il consent ou non à recevoir des courriers recommandés électroniques. Ainsi l'étape 299 peut comprendre tout ou partie des opérations décrites pour l'étape 222 ou respectivement l'étape 242.

Dans un ou plusieurs modes de réalisation, le procédé d'envoi de courrier recommandé électronique comprend une réception 301, par exemple par le système informatique 110 du tiers de recueil de consentement, d'une requête d'envoi de courrier recommandé électronique provenant d'un premier utilisateur expéditeur. L'étape 301 peut être mise en œuvre selon l'un quelconque des modes de réalisation décrits pour l'étape 201.

Dans un ou plusieurs modes de réalisation, le procédé d'envoi de courrier recommandé électronique comprend une interrogation 302, par exemple par le système informatique 110 du tiers de recueil de consentement, de la base de données de consentements pour déterminer si un consentement ou refus a été donné par l'utilisateur destinataire pour une notification par voie électronique d'un courrier recommandé provenant du premier utilisateur expéditeur. L'étape 302 peut être mise en œuvre selon l'un quelconque des modes de réalisation décrits pour l'étape 202.

Dans un ou plusieurs modes de réalisation, le procédé d'envoi de courrier recommandé électronique comprend, en cas de réponse positive à l'interrogation de l'étape 302, un déclenchement d'une notification 324 par voie électronique, par un système informatique d'un tiers achemineur, du courrier recommandé électronique et une mise à disposition 325 de l'utilisateur expéditeur de données probatoires représentatives à la fois du consentement donné et de la remise par voie électronique du courrier recommandé électronique. L'étape 324 (respectivement 325) peut être mise en œuvre selon l'un quelconque des modes de réalisation décrits pour l'étape 224 (respectivement 225).

La mise à disposition peut consister en un envoi par message électronique des données probatoires. La mise à disposition peut également consister en un envoi à l'utilisateur destinataire d'un lien hypertexte pour télécharger les données probatoires. La mise à disposition peut également consister à rendre accessible les données probatoires via un compte utilisateur et une application web. Toute autre méthode de mise à disposition est applicable.

Dans un ou plusieurs modes de réalisation, le procédé d'envoi de courrier recommandé électronique comprend, en cas de réponse négative à l'interrogation de l'étape 302, un déclenchement d'une mise en œuvre, par un système informatique d'un tiers éditique, d'un procédé 351 d'envoi de courrier recommandé sous forme papier. L'étape 351 peut être mise en œuvre selon l'un quelconque des modes de réalisation décrits pour l'étape 251.

### Procédure de vérification d'identité

Dans un ou plusieurs modes de réalisation, la procédure de vérification d'identité comprend :
- une transmission, à un système informatique 120 d'un tiers de vérification d'identité apte à mettre en œuvre la procédure de vérification d'identité, de données d'identification et/ou d'authentification de l'utilisateur destinataire ;
- une réception, en provenance du système informatique 120 du tiers de vérification d'identité, du résultat de la procédure de vérification d'identité.

le résultat de la procédure de vérification d'identité comprenant des données d'identification de l'utilisateur destinataire vérifiées par le système informatique du tiers de vérification d'identité et/ou une information (par exemple binaire) selon que la vérification est positive ou non.

Selon le système législatif applicable, différents degrés de sécurité peuvent être nécessaires pour la vérification d'identité et la procédure applicable peut donc être mise en œuvre de différentes manières. De manière générale, l'utilisateur destinataire dont l'identité doit être vérifiée peut être mis en relation avec le tiers de vérification d'identité. Cette mise en relation peut s'effectuer via un site web ou un serveur vocal ou tout autre système de communication approprié.

Des données d'identification et/ou d'authentification (par exemple : copie d'un document d'identité, copie du permis de conduire, copie de livret de famille, attestation d'assurance, extrait KBIS pour une société, document numérique d'identification, certificat numérique, clef cryptographique, numéro de téléphone, numéro de carte d'identité, numéro de sécurité sociale, image de l'iris, photographie, etc) de l'utilisateur destinataire sont fournies pour vérification par le tiers de vérification d'identité.

Le système informatique du tiers de vérification d'identité peut renvoyer un résultat binaire indiquant si les données d'identification et/ou d'authentification sont valides ou non, et, en cas de vérification positive, renvoyer des données d'identification de l'utilisateur destinataire vérifiées, et optionnellement signées numériquement, par le tiers de vérification d'identité.

Le contenu de la réponse de la vérification d'identité peut contenir des éléments d'information tels que, par exemple (non exhaustif), les informations assorties à l'identification, un rappel des conditions du consentement, des conditions d'utilisation du service d'envoi de recommandé ou de recueil de consentement, les explications de l'échec de la vérification d'identité, etc.

Par ailleurs, la création d'un compte utilisateur auprès du tiers de vérification d'identité peut être prévue afin d'éviter de vérifier l'identité d'un utilisateur à chaque nouvelle réception d'un envoi recommandé électronique ou chaque nouvelle requête de recueil de consentement. Ce compte utilisateur peut être accessible via un mot de passe ou d'autres données d'authentification.

La vérification d'identité peut être effectuée de manière synchrone, ou de manière asynchrone c'est à dire de manière différée. Le traitement asynchrone d'une requête peut impliquer un traitement par un être humain ou être entièrement automatisé sur la base de données d'identification ou d'authentification de référence.

Que le traitement de la vérification d'identité soit en direct ou asynchrone, le résultat de la vérification d'identité peut être transmis à l'utilisateur destinataire via un courriel, via un site web ou un serveur vocal ou tout autre système de communication approprié. En l'occurrence, les moyens de communication déjà prévus pour les échanges avec l'utilisateur destinataire dans le cadre du procédé de recueil de consentement ou du procédé d'envoi de recommandé électronique peuvent être utilisés.

Dans une autre variante de cette étape, un système informatique 120 du tiers de vérification d'identité peut être indépendant ou non du système informatique 120 du tiers de recueil de consentement.

Selon une implémentation, les différentes étapes du ou des procédés, méthodes ou procédures décrits dans ce document sont mises en œuvre par un logiciel ou programme d'ordinateur.

La présente description concerne ainsi un logiciel ou programme d'ordinateur, susceptible d'être exécuté par un ordinateur ou par un processeur de données, ce logiciel / programme d'ordinateur comportant des instructions pour commander l'exécution des étapes du ou des procédés décrits dans ce document. Ces instructions sont destinées à être stockées dans une mémoire d'un dispositif informatique ou système informatique, chargées puis exécutées par une unité de traitement ou processeur de données de ce dispositif informatique ou système informatique afin de mettre en œuvre les étapes du ou des procédés décrits dans ce document.

Ce dispositif informatique ou système informatique comprend ainsi des moyens de mise en œuvre des étapes du ou des procédés décrits dans ce document. Ces moyens sont des moyens logiciels (software) et/ou matériels (hardware) de mise en œuvre des étapes du ou des procédés décrits dans ce document.

Ce logiciel ou programme d'ordinateur peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente description concerne aussi un support de données lisible par un processeur de données, comprenant des instructions d'un programme d'ordinateur tel que mentionné ci-dessus. Le support de données peut être n'importe quelle entité ou dispositif capable de stocker de telles instructions.

Des modes de réalisation de supports lisibles par ordinateur comportent, sans s'y limiter, à la fois des supports de stockage informatiques et des supports de communication comportant n'importe quel support qui facilite le transfert d'un programme d'ordinateur d'un endroit à un autre. De manière spécifique, les instructions logicielles ou code de programme lisible par ordinateur pour exécuter les modes de réalisation décrits ici peuvent être stockés, temporairement ou définitivement, en totalité ou en partie, sur un support lisible par ordinateur, non transitoire, d'un dispositif de stockage local ou distant comportant un ou plusieurs supports de stockage.

## Revendications

1. Procédé de recueil de consentement électronique pour une notification par voie électronique d'un courrier recommandé, le procédé étant mis en œuvre par au moins un ordinateur et comprenant les étapes suivantes :
- une réception (200) d'une requête électronique de recueil d'un consentement d'un utilisateur destinataire à recevoir un courrier recommandé électronique provenant d'un utilisateur expéditeur, la requête comprenant une adresse électronique de contact de l'utilisateur destinataire ; et
- un envoi (211) à l'adresse électronique de contact d'un message multimédia d'interrogation de l'utilisateur destinataire, le message multimédia comprenant une identification de l'utilisateur expéditeur et des données de recueil de réponse pour répondre au message multimédia;
- un déclenchement (221, 241) d'une procédure de vérification d'identité de l'utilisateur destinataire et une obtention d'un résultat de la procédure de vérification d'identité ; et
- une mise à disposition (223) de l'utilisateur expéditeur, en cas de réception d'une réponse positive au message multimédia par laquelle l'utilisateur destinataire signifie son consentement et en cas de résultat positif de la procédure de vérification d'identité, de données probatoires représentatives du consentement.

2. Procédé selon la revendication 1, comprenant en outre
- une mise à disposition (231) à l'utilisateur expéditeur, en cas de non réception dans un premier délai d'attente d'une réponse de l'utilisateur destinataire au message multimédia, de données numériques représentatives de l'absence de réception de réponse.

3. Procédé selon la revendication 1 ou 2, comprenant en outre
- une mise à disposition (243) de l'utilisateur expéditeur, en cas de réception d'une réponse négative par laquelle l'utilisateur destinataire signifie son refus, de données numériques représentatives du refus.

4. Procédé selon l'une quelconque des revendications précédentes, dans lequel les données de recueil de réponse comprennent au moins un lien hypertexte à activer pour déclencher l'envoi d'une réponse.

5. Procédé selon l'une quelconque des revendications précédentes, dans lequel la procédure de vérification d'identité est déclenchée en cas de réponse positive ou négative au message multimédia d'interrogation.

6. Procédé selon l'une quelconque des revendications précédentes, comprenant, en cas de réception d'une réponse au message multimédia, un horodatage de la réponse et un stockage d'une date en association avec les données probatoires.

7. Procédé selon l'une quelconque des revendications précédentes, comprenant en outre
- une transmission, à un système informatique (120) d'un tiers de vérification d'identité apte à mettre en œuvre la procédure de vérification d'identité, de données d'identification et/ou d'authentification de l'utilisateur destinataire ;
- une réception, en provenance du système informatique (120) du tiers de vérification d'identité, du résultat de la procédure de vérification d'identité, le résultat de la procédure de vérification d'identité comprenant des données d'identification de l'utilisateur destinataire vérifiées par le système informatique du tiers de vérification d'identité.

8. Procédé d'envoi de courrier recommandé électronique, le procédé étant mis en œuvre par au moins un ordinateur et étant **caractérisé en ce qu'**il comprend:
- un enregistrement (299), dans une base de données de consentements, de données numériques représentatives d'un consentement ou refus donné par un utilisateur destinataire pour une notification par voie électronique d'un courrier recommandé provenant d'un ensemble d'au moins un utilisateur expéditeur ;
- une réception (301), d'une requête d'envoi de courrier recommandé électronique provenant d'un premier utilisateur expéditeur;
- une interrogation (302) de la base de données de consentements pour déterminer si un consentement a été donné par l'utilisateur destinataire pour une notification par voie électronique d'un courrier recommandé provenant du premier utilisateur expéditeur ;
- en cas de réponse positive à l'interrogation, un déclenchement d'une notification (324) par voie électronique, par un système informatique d'un tiers achemineur, du courrier recommandé électronique et une mise à disposition (325) de l'utilisateur expéditeur de données probatoires représentatives du consentement donné et de la remise par voie électronique du courrier recommandé électronique.

9. Procédé d'envoi de courrier recommandé électronique selon la revendication 8, le procédé comprenant en outre
- en cas de réponse négative ou en cas de non réception dans un premier délai d'attente d'une réponse de l'utilisateur destinataire au message multimédia, un déclenchement d'une mise en œuvre, par un système informatique d'un tiers éditique, d'un procédé (351) d'envoi de courrier recommandé sous forme papier.

10. Procédé d'envoi de courrier recommandé électronique selon la revendication 8 ou 9, comprenant une mise en œuvre d'un procédé de recueil de consentement électronique selon la revendication 1, ledit enregistrement des données numériques représentatives d'un consentement ou refus donné par un utilisateur destinataire étant consécutif à une réponse donnée au message multimédia envoyé lors dudit procédé de recueil de consentement électronique.

11. Procédé d'envoi de courrier recommandé électronique selon la revendication 8 ou 9, dans lequel ledit enregistrement est consécutif à une requête d'enregistrement de consentement ou refus émise par l'utilisateur destinataire.

12. Procédé d'envoi de courrier recommandé électronique, le procédé étant mis en œuvre par ordinateur et étant **caractérisé en ce qu'**il comprend les étapes suivantes :
- une réception (201), d'une requête d'envoi de courrier recommandé électronique provenant d'un utilisateur expéditeur, la requête comprenant une adresse électronique de contact de l'utilisateur destinataire;
- un envoi (211) à l'adresse électronique de contact d'un message multimédia d'interrogation de l'utilisateur destinataire, le message multimédia d'interrogation comprenant une identification de l'utilisateur expéditeur et des données de recueil de réponse pour répondre au message multimédia d'interrogation;
- un déclenchement (221, 241) d'une procédure de vérification d'identité de l'utilisateur destinataire et une obtention d'un résultat de la procédure de vérification d'identité ;
le procédé comprenant en outre, en cas de réception d'une réponse positive au message multimédia par laquelle l'utilisateur destinataire signifie son consentement et en cas de résultat positif de la procédure de vérification d'identité:
- un déclenchement (224) d'une notification par voie électronique du courrier recommandé électronique et
- une mise à disposition (225) à l'utilisateur expéditeur de données probatoires représentatives du consentement et de la notification par voie électronique du courrier recommandé électronique.

13. Procédé d'envoi de courrier recommandé électronique selon la revendication 12, le procédé comprenant en outre, en cas de réception d'une réponse négative au message multimédia par laquelle l'utilisateur destinataire signifie son refus ou en cas d'absence de réponse dans un délai d'attente, un déclenchement d'une mise en œuvre, par un système informatique d'un tiers éditique, d'un procédé (251) d'envoi de courrier recommandé sous forme papier.

14. Programme informatique comprenant des instructions de code pour l'exécution des étapes d'un procédé selon l'une quelconque des revendications 1 à 13 lorsque ledit programme informatique est exécuté par un processeur de données.

15. Système informatique de recueil de consentement électronique pour une notification par voie électronique d'un courrier recommandé, le système informatique comprenant au moins une mémoire de stockage d'instructions de code de programme d'ordinateur pour l'exécution d'un procédé selon l'une quelconque des revendications 1 à 13 et au moins un processeur de données configuré pour exécuter ledit programme d'ordinateur.

## Patentansprüche

1. Verfahren zur Einholung einer elektronischen Einwilligung für eine Benachrichtigung über ein Einschreiben, wobei das Verfahren von mindestens einem Computer umgesetzt wird und die folgenden Schritte umfasst:
- ein Empfangen (200) einer elektronischen Anfrage zur Einholung einer Einwilligung eines Empfängerbenutzers zum Empfang eines elektronischen Einschreibens von einem Absenderbenutzer, wobei die Anfrage eine elektronische Kontaktadresse des Empfängerbenutzers umfasst; und
- ein Senden (211), an die elektronische Kontaktadresse, einer Multimedianachricht zur Abfrage des Empfängerbenutzers, wobei die Multimedianachricht eine Identifikation des Absenderbenutzers und Daten zur Einholung einer Antwort zur Antwort auf die Multimedianachricht umfasst;
- ein Auslösen (221, 241) eines Verfahren zur Überprüfung einer Identität des Empfängerbenutzers und ein Erhalten eines Ergebnisses des Identitätsüberprüfungsverfahrens; und
- ein Bereitstellen (223), an den Absenderbenutzer, bei Empfang einer positiven Antwort auf die Multimedianachricht, durch welche der Empfängerbenutzer seine Einwilligung mitteilt, und bei einem positiven Ergebnis des Identitätsüberprüfungsverfahrens, von Nachweisdaten, die für die Einwilligung repräsentativ sind.

2. Verfahren nach Anspruch 1, ferner umfassend
- ein Bereitstellen (231), an den Absenderbenutzer, bei Nichtempfang einer Antwort des Empfängerbenutzers auf die Multimedianachricht in einer ersten Wartezeit, von digitalen Daten, die für das Nichtvorliegen des Empfangs einer Antwort repräsentativ sind.

3. Verfahren nach Anspruch 1 oder 2, ferner umfassend
- ein Bereitstellen (243), an den Absenderbenutzer bei Empfang einer negativen Antwort, durch welche der Empfängerbenutzer seine Ablehnung mitteilt, von digitalen Daten, die für die Ablehnung repräsentativ sind.

4. Verfahren nach einem der vorhergehenden Ansprüche, wobei die Daten zur Einholung der Antwort mindestens einen Hypertextlink umfassen, der zu aktivieren ist, um die Sendung einer Antwort auszulösen.

5. Verfahren nach einem der vorhergehenden Ansprüche, wobei das Identitätsüberprüfungsverfahren bei einer positiven oder negativen Antwort auf die Abfrage-Multimedianachricht ausgelöst wird.

6. Verfahren nach einem der vorhergehenden Ansprüche, umfassend, bei Empfang einer Antwort auf die Multimedianachricht, ein Versehen der Antwort mit einem Zeitstempel und ein Speichern eines Datums in Verbindung mit den Nachweisdaten.

7. Verfahren nach einem der vorhergehenden Ansprüche, ferner umfassend
- ein Übertragen, an ein Datenverarbeitungssystem (120) eines Dritten für Identitätsüberprüfung, das geeignet ist, das Identitätsüberprüfungsverfahren umzusetzen, von Identifikations- und/oder Authentifizierungsdaten des Empfängerbenutzers;
- ein Empfangen, vom Datenverarbeitungssystem (120) des Dritten für Identitätsüberprüfung, des Ergebnisses des Identitätsüberprüfungsverfahrens, wobei das Ergebnis des Identitätsüberprüfungsverfahrens Identifikationsdaten des Empfängerbenutzers umfasst, die vom Datenverarbeitungssystem des Dritten für Identitätsüberprüfung überprüft sind.

8. Sendeverfahren für ein elektronisches Einschreiben, wobei das Verfahren von mindestens einem Computer umgesetzt wird und **dadurch gekennzeichnet ist, dass** es Folgendes umfasst:
- ein Abspeichern (299), in einer Einwilligungsdatenbank, von digitalen Daten, die für eine Einwilligung oder Ablehnung repräsentativ sind, die von einem Empfängerbenutzer für eine Benachrichtigung, auf elektronischem Weg, über ein Einschreiben von einer Menge von mindestens einem Absenderbenutzer erteilt wurde;
- ein Empfangen (301) einer Anfrage zur Sendung eines elektronischen Einschreibens von einem ersten Absenderbenutzer;
- ein Abfragen (302) der Einwilligungsdatenbank, um zu bestimmen, ob eine Einwilligung vom Empfängerbenutzer für eine Benachrichtigung, auf elektronischem Weg, über ein elektronisches Einschreiben vom ersten Absenderbenutzer erteilt wurde;
- bei positiver Antwort auf die Abfrage, ein Auslösen einer Benachrichtigung (324) auf elektronischem Weg, durch ein Datenverarbeitungssystem eines Dritten für Beförderung, des elektronischen Einschreibens und ein Bereitstellen (325), an den Absenderbenutzer, von Nachweisdaten, die für die erteilte Einwilligung und die Übermittlung des elektronischen Einschreibens auf elektronischem Weg repräsentativ sind.

9. Sendeverfahren für ein elektronisches Einschreiben nach Anspruch 8, das Verfahren ferner umfassend
- bei negativer Antwort oder bei Nichtempfang einer Antwort des Empfängerbenutzers auf die Multimedianachricht in einer ersten Wartezeit, ein Auslösen einer Umsetzung, durch ein Datenverarbeitungssystem eines Dritten für Publikationserstellung, eines Verfahrens (351) zur Sendung eines Einschreibens in Papierform.

10. Sendeverfahren für ein elektronisches Einschreiben nach Anspruch 8 oder 9, umfassend eine Umsetzung eines Verfahrens zur Einholung einer elektronischen Einwilligung nach Anspruch 1, wobei das Abspeichern der digitalen Daten, die für eine Einwilligung oder Ablehnung repräsentativ sind, die von einem Empfängerbenutzer erteilt wurde, auf eine Antwort folgt, die auf die Multimedianachricht hin abgegeben wird, die beim Verfahren zur Einholung der elektronischen Einwilligung gesendet wird.

11. Sendeverfahren für ein elektronisches Einschreiben nach Anspruch 8 oder 9, wobei das Abspeichern auf eine Anfrage zur Abspeicherung einer Einwilligung oder Ablehnung folgt, die vom Empfängerbenutzer abgegeben wird.

12. Sendeverfahren für ein elektronisches Einschreiben, wobei das Verfahren von einem Computer umgesetzt wird und **dadurch gekennzeichnet ist, dass** es die folgenden Schritte umfasst:
- ein Empfangen (201) einer Anfrage zur Sendung eines elektronischen Einschreibens von einem Absenderbenutzer, wobei die Anfrage eine elektronische Kontaktadresse des Empfängerbenutzers umfasst;
- ein Senden (211), an die elektronische Kontaktadresse, einer Multimedianachricht zur Abfrage des Empfängerbenutzers, wobei die Abfrage-Multimedianachricht eine Identifikation des Absenderbenutzers und Daten zur Einholung einer Antwort zur Antwort auf die Abfrage-Multimedianachricht umfasst;
- ein Auslösen (221, 241) eines Verfahren zur Überprüfung einer Identität des Empfängerbenutzers und ein Erhalten eines Ergebnisses des Identitätsüberprüfungsverfahrens;
wobei das Verfahren ferner bei Empfang einer positiven Antwort auf die Multimedianachricht, durch welche der Empfängerbenutzer seine Einwilligung mitteilt, und bei positivem Ergebnis des Identitätsüberprüfungsverfahrens, Folgendes umfasst:
- ein Auslösen (224) einer Benachrichtigung über das elektronische Einschreiben auf elektronischem Weg, und
- ein Bereitstellen (225), an den Absenderbenutzer, von Nachweisdaten, die für die Einwilligung und die Benachrichtigung über das elektronische Einschreiben auf elektronischem Weg repräsentativ sind.

13. Sendeverfahren für ein elektronisches Einschreiben nach Anspruch 12, das Verfahren ferner umfassend, bei Empfang einer negativen Antwort auf die Multimedianachricht, durch welche der Empfängerbenutzer seine Ablehnung mitteilt, oder bei Nichtvorhandensein einer Antwort in einer Wartezeit, ein Auslösen einer Umsetzung, durch ein Datenverarbeitungssystem eines Dritten für Publikationserstellung, eines Sendeverfahrens (251) für ein Einschreiben in Papierform.

14. Computerprogramm, umfassend Code-Anweisungen zur Ausführung der Schritte eines Verfahrens nach einem der Ansprüche 1 bis 13, wenn das Computerprogramm von einem Datenprozessor ausgeführt wird.

15. Datenverarbeitungssystem zur Einholung einer elektronischen Einwilligung für eine Benachrichtigung über ein Einschreiben auf elektronischem Weg, wobei das Datenverarbeitungssystem mindestens einen Speicher zur Speicherung von Computerprogrammcode-Anweisungen zur Ausführung eines Verfahrens nach einem der Ansprüche 1 bis 13 und mindestens einen Datenprozessor, der dazu ausgebildet ist, das Computerprogramm auszuführen, umfasst.

## Claims

1. Method for collecting electronic consent for electronic notification of a registered mail, the method being implemented by at least one computer and comprising the following steps:
- receiving (200) an electronic request to collect consent from a recipient user intended to receive an electronic registered mail from a sender user, the request comprising an electronic contact address of the recipient user; and
- sending (211), to the electronic contact address, a multimedia message for questioning the recipient user, the multimedia message comprising identification of the sender user and response collection data for responding to the multimedia message;
- triggering (221, 241) a procedure for verifying the identity of the recipient user and obtaining a result of the identity verification procedure; and
- providing (223) the sender user, in the case of receiving a positive response to the multimedia message by means of which the recipient user indicates their consent and in the case of a positive result of the identity verification procedure, with probative data representative of consent.

2. Method according to Claim 1, further comprising
- providing (231) the sender user, in the case of non-reception within a first period of waiting for a response from the recipient user to the multimedia message, with digital data representative of the absence of reception of a response.

3. Method according to Claim 1 or 2, further comprising
- providing (243) the sender user, in the case of receiving a negative response by means of which the recipient user indicates their refusal, with digital data representative of the refusal.

4. Method according to any one of the preceding claims, wherein the response collection data comprise at least one hypertext link to be activated in order to trigger the sending of a response.

5. Method according to any one of the preceding claims, wherein the identity verification procedure is triggered in the case of a positive or negative response to the questioning multimedia message.

6. Method according to any one of the preceding claims, comprising, in the case of receiving a response to the multimedia message, timestamping the response and storing a date in association with the probative data.

7. Method according to any one of the preceding claims, further comprising
- transmitting, to a computer system (120) of an identity verification third party able to implement the identity verification procedure, data for identifying and/or authenticating the recipient user;
- receiving, from the computer system (120) of the identity verification third party, the result of the identity verification procedure, the result of the identity verification procedure comprising data for identifying the recipient user verified by the computer system of the identity verification third party.

8. Method for sending electronic registered mail, the method being implemented by at least one computer and being **characterized in that** it comprises:
- recording (299), in a consent database, digital data representative of consent or refusal given by a recipient user for an electronic notification of a registered mail originating from a set of at least one sender user;
- receiving (301) a request to send an electronic registered mail from a first sender user;
- interrogating (302) the consent database to determine whether consent has been given by the recipient user for electronic notification of a registered mail originating from the first sender user;
- in the case of a positive response to the interrogation, triggering an electronic notification (324), by a computer system of a third party forwarder, of the electronic registered mail and providing (325) the sender user with probative data representative of the consent given and the electronic delivery of the electronic registered mail.

9. Method for sending electronic registered mail according to Claim 8, the method further comprising
- in the case of a negative response or in the case of non-reception within a first period of waiting for a response from the recipient user to the multimedia message, triggering implementation, by a computer system of a desktop publishing third party, of a method (351) for sending registered mail in paper form.

10. Method for sending electronic registered mail according to Claim 8 or 9, comprising implementation of a method for collecting electronic consent according to Claim 1, said recording of digital data representative of consent or refusal given by a recipient user being consecutive to a response given to the multimedia message sent during said method for collecting electronic consent.

11. Method for sending electronic registered mail according to Claim 8 or 9, wherein said recording is consecutive to a request to record consent or refusal sent by the recipient user.

12. Method for sending registered electronic mail, the method being implemented by computer and being **characterized in that** it comprises the following steps:
- receiving (201) a request to send electronic registered mail from a sender user, the request comprising an electronic contact address of the recipient user;
- sending (211), to the electronic contact address, a multimedia message for questioning the recipient user, the multimedia message comprising identification of the sender user and response collection data for responding to the multimedia message;
- triggering (221, 241) a procedure for verifying the identity of the recipient user and obtaining a result of the identity verification procedure; the method further comprising, in the case of receiving a positive response to the multimedia message by means of which the recipient user indicates their consent and in the case of a positive result of the identity verification procedure:
- triggering (224) electronic notification of the electronic registered mail and
- providing (225) the sender user with probative data representative of consent and the electronic notification of the electronic registered mail.

13. Method for sending electronic registered mail according to Claim 12, the method further comprising, in the case of receiving a negative response to the multimedia message by means of which the recipient user indicates their refusal or in the case of absence of response within a waiting period, triggering implementation, by a computer system of a desktop publishing third party, of a method (251) for sending registered mail in paper form.

14. Computer program comprising code instructions for executing the steps of a method according to any one of Claims 1 to 13 when said computer program is executed by a data processor.

15. Computer system for collecting electronic consent for electronic notification of a registered mail, the computer system comprising at least one memory for storing computer program code instructions for executing a method according to any one of Claims 1 to 13 and at least one data processor configured to execute said computer program.
